# EUROPÄISCHE PATENTSCHRIFT

(11) **EP 1 206 370 B1**
(45) Veröffentlichungstag und Bekanntmachung des Hinweises auf die Patenterteilung: **02.01.2003**
(21) Anmeldenummer: 00963950.1
(22) Anmeldetag: 25.08.2000
(51) Int. Cl.: B60Q 3/02

(54) **OPTISCHER BLENDUNGSBEGRENZER**
OPTICAL GLARE LIMITER
LIMITEUR D'EBLOUISSEMENT OPTIQUE

(30) Priorität: 25.08.1999 DE 19941125
(43) Veröffentlichungstag der Anmeldung: 22.05.2002
(73) Patentinhaber: Braun, Uwe Peter, Dipl.-Ing., 19309 Lenzen (DE)
(72) Erfinder: Braun, Uwe Peter, Dipl.-Ing., 19309 Lenzen (DE)
(74) Vertreter: Neumann, Günter
(86) Internationale Anmeldenummer: DE0002983
(87) Internationale Veröffentlichungsnummer: WO01014168

(56) Entgegenhaltungen:
- WO-A-99/67106
- DE-A- 3 048 424
- US-A- 4 787 735
- US-A- 4 905 125

## Beschreibung

Die Erfindung betrifft einen optischen Blendungsbegrenzer, wie er insbesondere für Kraftfahrzeuge einsetzbar ist.

Es ist allgemein bekannt, daß die Fähigkeit des Sehorgans des Menschen, Helligkeits-, Farb- und Formenstrukturen der Außenwelt mehr oder weniger schnell erfassen und wahrnehmen zu können, neben der Adaptionsfähigkeit des Auges wesentlich von der Leuchtdichte der auf das Auge auftreffenden Strahlung und den Leuchtdichteunterschieden im Gesichtsfeld abhängt. Bei zu hohen Leuclitdichten im Gesichtsfeld kann schließlich die Wahrnehmungsfähigkeit und damit auch die Sehleistung des Auges wesentlich beeinträchtigt werden. Ein solcher, die Grundfunktionen des Auges merklich beeinträchtigender Einfluß wird als Blendung bezeichnet.

Es ist des weiteren bekannt, daß im nächtlichen Straßenverkehr nicht wenige Verkehrsunfälle auf unterlassene oder falsche Reaktionen des Fahrzeugführers aufgrund von Blendungen des menschlichen Auges zurückzuführen sind. Bei nächtlichen Fahrten ist die Ciliar-Muskulatur der Augen je nach dem Fixpunkt der Betrachtung mehr oder weniger angespannt. Die Pupille ist verhältnismäßig weit geöffnet und das Auge an die jeweils im Gesichtsfeld herrschende mittlere Leuchtdichte angepaßt. Ändert sich zum Beispiel die mittlere Leuchtdichte durch das Licht eines entgegenkommenden Fahrzeuges, so benötigt der Vorgang der Adaption von einem Adaptionszustand zum anderen eine gewisse Zeit, die von der Vorbelichtung des Auges, der Richtung der Adaption und der Differenz der Leuchtdichten vor und nach der Adaption abhängig ist. Je größer durch das Licht entgegenkommender Fahrzeuge die Differenz der Leuchtdichte vor der Adaption ist, um so stärker wird die Netzhaut gereizt, erhöhen sich die Anforderungen an die Geschwindigkeit der Hell- und Dunkeladaption und führt das im Augeninnern erzeugte Streulicht zu einem Schleier auf der Netzhaut und schließlich zu einer verminderten Sehleistung. Die Folgen sind unter anderem, daß entgegenkommende Fahrzeuge oft nur unscharf oder zu spät erkannt und Entfernungen falsch eingeschätzt und dadurch nicht angemessene Reaktionen des Fahrzeugführers ausgelöst werden.

Der wachsende Anteil von Kraftfahrzeugscheinwerfern auf Xenon-Basis verstärkt noch die Gefahren, die von den schädlichen Auswirkungen der höhere Leuchtkraft dieses Lampentyps im Verhältnis zu denen herkömmlicher Halogen-Scheinwerfer ausgehen. Untersuchungen haben ergeben, daß grundsätzlich und unabhängig von meßbaren Beeinträchtigungen der Sehkraft sich Testpersonen aller Altersgruppen von dem Xenon-Licht gestört fühlen. Vor allem ältere Menschen konnten bei Xenon-Gegenlicht bestimmte Kontraste nicht mehr erkennen (Der Spiegel, 7/1998, Seiten 168 ff).

Aus der DE 42 18 436 A1 ist nun eine Beleuchtungseinrichtung für Kraftfahrzeuge bekannt, die bei Nachtfahrten die Blendwirkung entgegenkommender Fahrzeuge mindern soll. Die Beleuchtungseinrichtung ist im Inneren des Kraftfahrzeuges im Bereich des Fahrers so angeordnet, daß außerhalb des Gesichtsfeldes des Fahrers eine Lichtquelle befestigt ist von der ein Teil des Lichtes auf das Gesicht des Fahrers gerichtet ist, wobei die Lichtquelle mit dem Fahrlicht des Kraftfahrzeuges derart gekoppelt ist, daß bei eingeschaltetem Fahrlicht die Lichtquelle leuchtet. Mit Hilfe von Sensoren soll sich die Lichtquelle bei entgegenkommenden Lichtquellen von Fahrzeugen einschalten.

Die mit der DE 42 18 436 A1 offenbarte technische Lösung hat den entscheidenden technischen Nachteil, daß sie die gestellte Aufgabe nicht erfüllen kann. Ein Teil des Lichtes der Lichtquelle der Beleuchtungseinrichtung ist direkt auf das Gesichtsfeld des Fahrers gerichtet und erzeugt dadurch selbst eine gefährliche Blendwirkung.

Die Erfindung hat sich daher die Aufgabe gestellt, einen verbesserten Blendungsbegrenzer zu schaffen, der insbesondere mit optischen Mitteln die Blendwirkung äußerer Lichtquellen auf das menschliche Auge herabsetzt.

Erfindungsgemäß wird die Aufgabe durch einen optischen Blendungsbegrenzer mit den Merkmalen des Anspruches 1 gelöst. Vorteilhafte Ausgestaltungen des erfindungsgemäßen Blendungsbegrenzers ergeben sich aus den Merkmalen der Unteransprüche 2 bis 8.

Der erfindungsgemäße optische Blendungsbegrenzer hat den Vorteil, daß er auf recht einfache Art und Weise die Blendwirkung äußerer Lichtquellen wirksam herabsetzt. Er ist deshalb für den Einsatz in Kraftfahrzeugen besonders geeignet. Der erfindungsgemäße Blendungsbegrenzer schützt den Fahrer vor der gefährlichen Blendwirkung einer Punktleuchte, wie es zum Stand der Technik dargelegt wurde, und gewährleistet innerhalb des Gesichtsfeldes des Fahrers annähernd homogene und breitflächige nahezu blendungsfreie Kontrastverhältnisse.

Bei Anwendung im nächtlichen Straßenverkehr werden die durch entgegenkommende Kraftfahrzeuge verursachten Leuchtdichteunterschiede im Gesichtsfeld wesentlich gemindert und dadurch die Blendwirkung nahezu kompensiert. Die befahrene Straße ist deutlich zu erkennen und der Fahrzeugführer ist in der Lage, die Verkehrssituation real einzuschätzen.

Die Blendwirkung entgegenkommender Kraftfahrzeuge ist in der Regel in einem Abstandsbereich zwischen den Fahrzeugen beginnend ab ca. 75 m zu verzeichnen. Mitunter steuert der Fahrzeugführer des betroffenen Fahrzeuges, verursacht durch die Blendwirkung, sein Fahrzeug jedoch nahezu blind.
Durch den optischen Blendungsbegrenzer wird das Umfeld im Bereich des Gesichtsfeldes des Fahrzeugführers bei Annäherung des ansonsten blendenden Fahrzeuges zeitlich vorgelagert so aufgehellt, daß sich das Auge rechtzeitig an eine höhere Leuchtintensität gewöhnt und die Blendwirkung des entgegenkommenden Fahrzeuges im Blendbereich von ca. 75 m nur noch äußerst gering ist. Die rechtzeitig erzeugte Umfeldhelligkeit des Gesichtsfeldes des Fahrzeugführers läßt Leuchtdichteunterschiede des Lichtes entgegenkommender und ansonsten blendender Autoscheinwerfer nur noch wesentlich eingeschränkt auf das menschliche Auge wirken. Weder Blendung noch störender Glanz auf der Frontscheibe des Kraftfahrzeuges können insofern zu schädlichen Auswirkungen bezüglich der Sehleistung des Auges führen. Die Anforderungen an die individuelle Adaptionsfähigkeit des menschlichen Auges werden deutlich herabgesetzt. Das ist vor allem auch für ältere Kraftfahrzeugführer von Bedeutung, da bei sich ändernden optischen Wahrnehmungsbedingungen mit zunehmendem Alter die für die Hell- und Dunkeladaption erforderliche Zeit zunimmt. Positive Wirkungen ergeben sich insbesondere auch für nervöse Kraftfahrer.

Die Minimierung der Leuchtdichteunterschiede im Gesichtsfeld hat zudem den Vorzug, daß das Auge und der Kraftfahrer weniger schnell ermüden, mit dem sich daraus ergebenden positiven emotionalen Einfluß auf die Stimmung und die Leistungsfähigkeit des Kraftfahrers.
Eine bevorzugte Ausführungsform des erfindungsgemäßen Blendungsbegrenzers sieht vor, durch Gewährleistung einer Grundhelligkeit die Pupille wie bei einer homogenen Raumbeleuchtung auf einem durchschnittlichen Leuchtdichteniveau zu halten, das dem Wachzustand des Menschen am Tage nahe kommt, so daß die Pupille auch bei dem ansonsten unterschiedlicher Leuchtdichte des Lichtes entgegenkommender Fahrzeuge keinen krassen Wechseln ausgesetzt ist.

Im folgenden soll der optische Blendungsbegrenzer an Hand von Zeichnungen näher erläutert werden. Es zeigen
- Fig. 1 -: die Seitenansicht eines aus der Sonnenblende eines Kraftfahrzeuges ausgeklappten optischen Blendungsbegrenzers
- Fig. 2 -: Draufsicht auf den konstruktiven Aufbau eines optischen Blendungsbegrenzers mit geteilter Ausstrahlungscharakteristik
- Fig. 3 -: die Seitenansicht eines am Himmel eines Kraftfahrzeuges angebrachten optischen Blendungsbegrenzer
- Fig. 4 -: die Seitenansicht eines PKW mit installiertem optischen Blendungsbegrenzer.

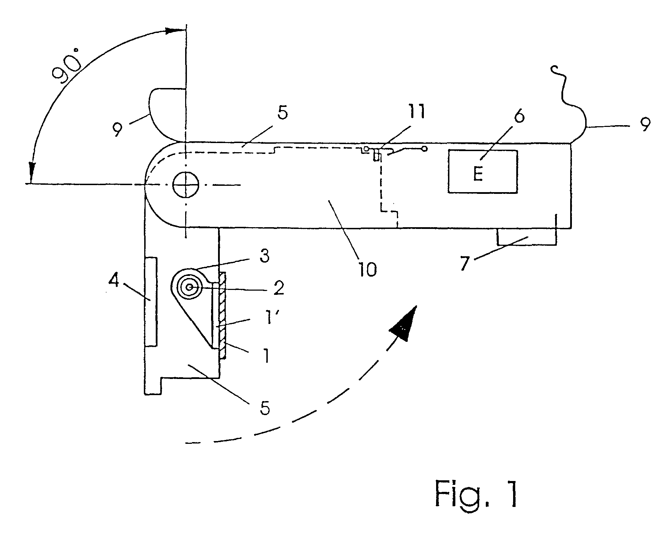

Fig. 1 zeigt einen aus einer Sonnenblende 9 eines Kraftfahrzeuges ausgeklappten optischen Blendungsbegrenzers im Betriebszustand, bestehend aus einem in einem Gehäuse 5 angeordneten Lichtempfängerbaustein 4 sowie einem ebenfalls in dem Gehäuse 5 angeordneten Reflektor 3 mit Prisma 1' und einem vor dem Prisma 1' angeordneten Diffuser 1, wobei die reflektierende Fläche hier nicht dargestellt ist. Der Reflektor 3 ist hier als asymmetrischer Reflektor ausgebildet. Ziffer 6 weist auf die elektronische Steuerung und Ziffer 7 auf den hier 4-stufig ausgebildeten Schalter für die Inbetriebnahme des Blendungsbegrenzers hin, dessen Ruheschalter mit dem Bezugszeichen 11 beziffert ist.
Das Gehäuse 5 ist aus der für den Ruhezustand des Blendungsbegrenzers vorgesehenen Aussparung 10 durch Betätigung des Schalters 11 in den in Fig. 1 abgebildeten Betriebszustand ausgeklappt worden.
Als Lichtempfängerbaustein 4 wird eine Fotodiode verwendet. Hierfür sind jedoch auch Fototransistoren, Fotowiderstände, Licht/Frequenzwandler, Licht/Spannungswandler, Fluoreszens-Kollektoren oder Solarzellenleisten geeignet.
Das Prisma 1' ist als Längsprisma mit gegenläufig in Sägezahnform angeordneten Prismen, hier nicht zu erkennen, ausgebildet. Auch andere Prismen, wie zum Beispiel Fresnellprismen, können hierfür eingesetzt werden. Als Lichtquelle 2 wird eine handelsübliche Glassockellampe Osram 2723/12 V, 2,3 Watt verwendet. Hierfür können auch Leuchtdioden, wie zum Beispiel eine Aluminium-Indium-Gallium-Phosphat Leuchtdiode mit 6500 mcd, Typ Alln Gap-LED, eingesetzt werden.
Als Diffuser 1 wird eine opale Scheibe bekannter Art verwendet, die 20 % bis 80 % des Lichtes 13 der Lichtquelle 2, vorzugsweise 30 % adsorbiert.
Die Stromversorgung erfolgt mit der Bordspannung des Kraftfahrzeuges.

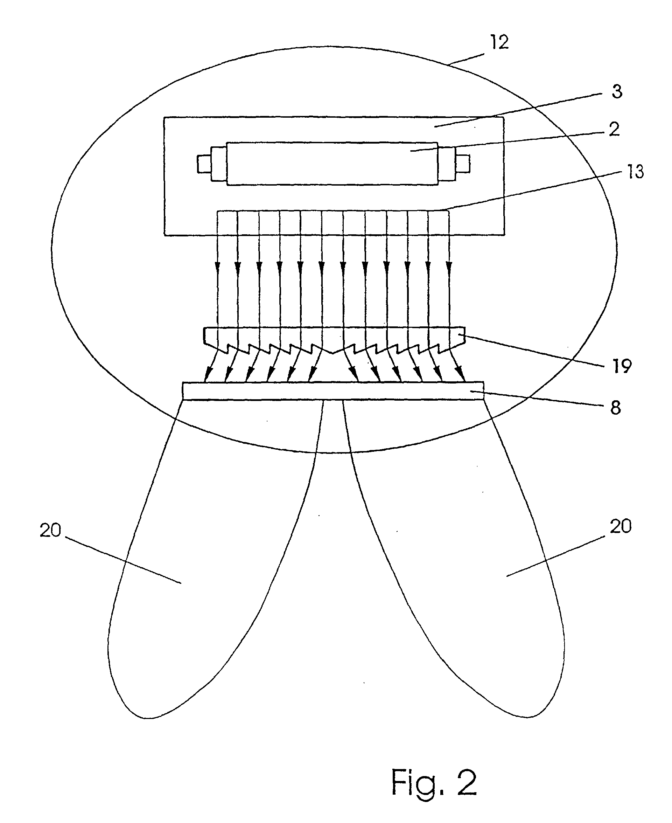

Aus Fig. 2 ist in Draufsicht der konstruktive Aufbau eines optischen Blendungsbegrenzers mit geteilter Ausstrahlungscharakteristik schematisch abgebildet.
Das Prisma 1' ist hier als Längsprisma 19 mit gegenläufig in Sägezahnform angeordneten Prismen ausgeführt, vor denen der Diffuser 8 angeordnet ist. Durch das Längsprisma 19 mit den gegenläufig in Sägezahnform angeordneten Prismen wird eine Ablenkung des Lichtes 13 der Lichtquelle 2 zu zwei Lichtströmen 20 mit gleicher Leuchtdichte bewirkt, die auf die hier nicht dargestellte reflektierende Fläche gerichtet sind.
Die reflektierende Fläche kann jedoch auch so angeornet sein, daß das Licht 13 der Lichtquelle 2 zunächst auf diese reflektierende Fläche trifft und erst das von dieser Fläche reflektierte Licht durch das Prisma 19 und den Diffuser 8 in zwei Lichtströme 20 abgelenkt wird, die das Gesichtsfeld 12, 14 mit homogenen Kontrastverhältnissen breitflächig und gleichmäßig ausleuchten und so eine geminderte Blendwirkung hervorbringen.

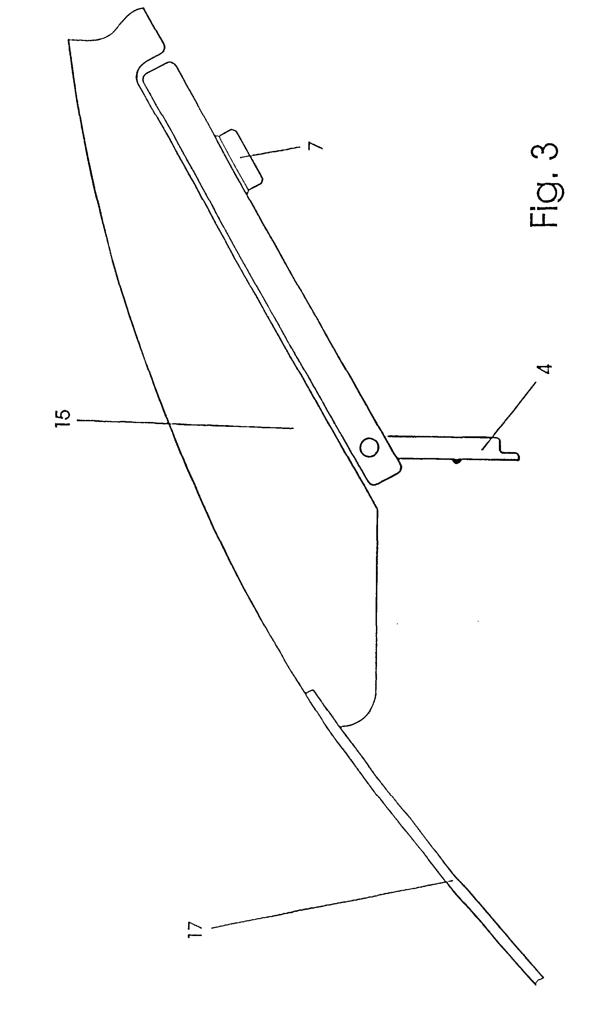

Fig. 3 zeigt einen am Himmel 15 eines Kraftfahrzeuges angebrachten optischen Blendungsbegrenzer mit dem Lichtempfängerbaustein 4 im Betriebszustand. Mittels des Schalters 6 sind mehrere Schaltstufen wählbar.
Unabhängig von der Stand-by-Stellung kann durch Wahl einer anderen Schaltstufe eine Grundhelligkeit der Lichtquelle 2 von ca. 30 % erzeugt werden. Des weiteren ist es möglich, die Grundhelligkeit der Lichtquelle 2 im Gesichtsfeld 12, 14 entsprechend der individuellen optischen Wahrnehmungsfähigkeit im Bereich zwischen 0 % und 100 % manuell einzustellen.
Sobald das blendend wirkende Licht entgegenkommender Fahrzeuge auf den Lichtempfängerbaustein 4 trifft, wird in Abhängigkeit von dessen Leuchtdichte die Lichtquelle 2 des Blendungsbegrenzers heller oder dunkler und verringert sich dadurch der Leuchtdichteunterschied zwischen den Licht der äußeren Lichtquelle 18 und der bis dahin gegebenen mittleren Leuchtdichte im Gesichtsfeld des Fahrzeugführers.

Das Umfeld im Bereich des Gesichtsfeldes 12, 14 kann durch die unterschiedlichen Schalterstellungen nicht nur den individuellen Sehgewohnheiten angepaßt werden, sondern es ist zugleich gewährleistet, daß weder eine ansich durch das Scheinwerferlicht entgegenkommender Kraftfahrzeuge hervorgerufene Reizung der Netzhaut des Auges noch störender Glanz, zum Beispiel durch spiegelnde Frontscheiben, die Wahrnehmungsfähigkeit und Sehleistung des menschlichen Auges in einem nicht vertretbarem Maß einschränken.
Die erzeugte Umfeldhelligkeit des Gesichtsfeldes 12 läßt die direkten Leuchtdichteunterschiede des Lichtes entgegenkommender Fahrzeuge nahezu verschwinden.

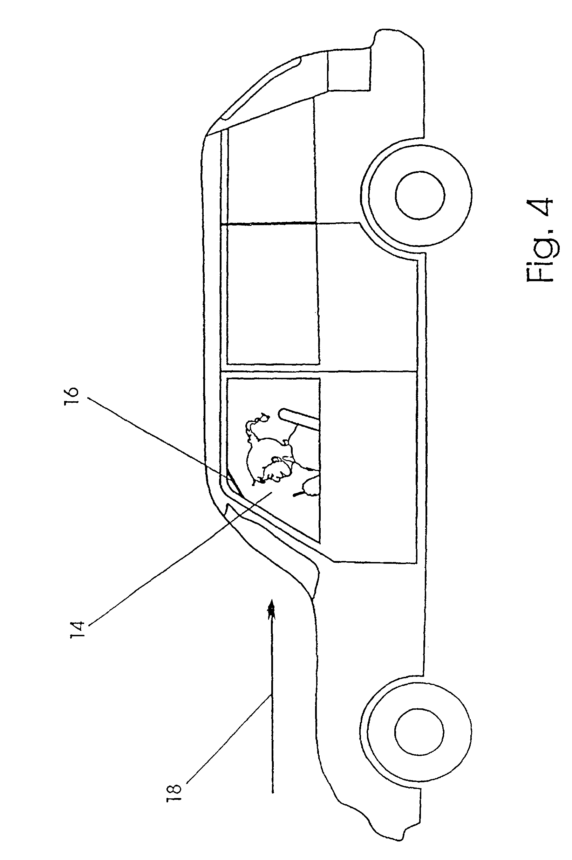

In Fig. 4 ist die Seitenansicht eines PKW mit installiertem optischen Blendungsbegrenzer 16 abgebildet.
Um durch den erfindungsgemäßen Blendungsbegrenzer 16 nicht die Ursache für eigene Blendungen ähnlich der Fahrzeuginnenbeleuchtung zu setzen, ist dessen richtige Positionierung im Fahrzeuginnenraum wegen der unterschiedlichen Größe der Fahrzeugführer von besonderer Bedeutung. Der Blendungsbegrenzer wird dazu durch leichtes Zurücknehmen aus der 90° Betriebsstellung so in Richtung der Verschlußposition 10 gebracht und manuell justiert, daß die Lichtstrahlung der Lichtquelle 2 das Gesichtsfeld 14 des Fahrzeugführers breitflächig und möglichst gleichmäßig ausleuchtet.

Statt der in den Figuren genannten Anordnungen und Ausgestaltungen des optischen Blendungsbgrenzers können selbstverständlich auch andere geeignete Anordnungen seiner Baugruppen beispielsweise in Abhängigkeit vom jeweiligen Fahrzeugtyp gewählt werden, wenn sie den gewünschten Zweck erfüllen. So kann auch die Sonnenblende eines Kraftfahrzeuges oder ein Teil davon mit einer reflektierenden Fläche versehen sein.

### Bezugszeichenaufstellung

- 1: Diffuser
- 1': Prisma
- 2: Lichtquelle
- 3: Reflektor
- 4: Lichtempfängerbaustein
- 5: Gehäuse
- 6: elektronische Steuerung
- 7: Schalter
- 8: Diffuser
- 9: Sonnenblendenbefestigung
- 10: Aussparung
- 11: Ruheschalter
- 12: Gesichtsfeld
- 13: Lichtstrahlung
- 14: Gesichtsfeld
- 15: Himmel
- 16: Blendungsbegrenzer
- 17: Frontscheibe
- 18: äußere Blendungsquelle
- 19: Längsprisma
- 20: Ausstrahlungscharakteristik

## Patentansprüche

1. Optischer Blendungsbegrenzer unter Verwendung einer elektrischen Stromquelle bestehend aus einem Lichtempfängerbaustein (4) und einer Lichtquelle (2) deren Lichtstrahlung (13) in Abhängigkeit von der Lichtstrahlung einer äußeren Blendungsquelle (18) regelbar ist, **dadurch gekennzeichnet, daß** die Lichtquelle (2) mit einem Reflektor (3) und einem Prisma (1') versehen und so angeordnet ist, daß deren Lichtstrahlung (13) vollständig auf eine reflektierende Fläche trifft und die von dieser Fläche reflektierte Lichtstrahlung im Gesichtsfeld (12, 14) eine geminderte Blendwirkung aufweist.

2. Optischer Blendungsbegrenzer nach Anspruch 1, **dadurch gekennzeichnet, daß** dem Prisma (1', 19) ein Diffuser (1, 8) vorgesetzt ist und/oder der Reflektor (3) asymmetrisch ausgebildet ist.

3. Optischer Blendungsbegrenzer nach Anspruch 1 oder 2, **dadurch gekennzeichnet, daß** der Diffuser (1, 8) eine opale Scheibe bekannter Art ist, die 20 % bis 80 % der Lichtsstrahlung (13) der Lichtquelle (2), vorzugsweise 30 % adsorbiert.

4. Optischer Blendungsbegrenzer nach einem der Ansprüche 1 bis 3, **dadurch gekennzeichnet, daß** das Prisma (1') als Längsprisma (19) mit vorzugsweise in Sägezahnform ausgebildeten und gegenläufig angeordneten Prismen ausgeführt ist, die die Lichtstrahlung (13) der Lichtquelle (2) in zwei Lichtströme (20), vorzugsweise zwei Lichtströme gleicher Leuchtdichte, ablenken.

5. optischer Blendungsbegrenzer nach Anspruch 1, **dadurch gekennzeichnet, daß** der Lichtempfängerbaustein (4) ein Bauelement ist, dessen elektrische Ausgangsgröße in Abhängigkeit von der Intensität der Lichtstrahlung der äußeren Blendungsquelle (18) sich reproduzierbar hinreichend stark ändert.

6. Optischer Blendungsbegrenzer nach einem der Ansprüche 1 bis 5, **dadurch gekennzeichnet, daß** der Lichtempfängerbaustein (4) eine Fotodiode, ein Fototransistor, ein Fotowiderstand, ein Licht/Frequenzwandler, ein Licht/Spannungswandler, ein Fluoreszens-Kollektor oder eine Solarzellenleiste ist.

7. Optischer Blendungsbegrenzer nach Anspruch 1, **dadurch gekennzeichnet, daß** die Lichtquelle (2) ihr Spektrum im sichtbaren Bereich hat und mit der abgestrahlten Lichtenergie eine Adaption des menschlichen Auges bei einer homogenen Beleuchtung des Innenraumes des Kraftfahrzeuges auf durchschnittlichem Leuchtdichteniveau erreicht und eine Glühlampe bekannter Art, eine Leuchtdiode, beispielsweise eine Aluminium-Indium-Gallium-Phosphat Leuchtdiode, ist.

8. Optischer Blendungsbegrenzer nach einem der Ansprüche 1 bis 7, **dadurch gekennzeichnet, daß** er in einem Kraftfahrzeug so angeordnet ist, daß er möglichst breitflächig und gleichmäßig das Gesichtsfeld ausleuchtet, und dazu vorzugsweise schwenkbar- oder ausklappbar an oder in der Sonnenblende des Kraftfahrzeuges und in der optischen Achse des Fahrzeugführers angeordnet ist.

## Claims

1. Optical glare limiter using an electrical power source consisting of a light sensor component (4) and a light source (2) whose light (13) can be regulated depending on the light beam from the blinding source (18), **characterized by** the light source (2) being covered with a reflector (3) and a prism (1') and arranged such that the light emitted (13) completely strikes a reflecting surface and the light reflected from this surface has a reduced blinding effect in the field of vision (12, 14).

2. Optical glare limiter in accordance with claim 1, **characterized by** the prism (1', 19) having a diffuser (1, 8) in front of it and/or the reflector (3) is asymmetrically shaped.

3. Optical glare limiter in accordance with claim 1 or 2, **characterized by** the diffusers (1, 8) being an opal disk that absorbs 20 to 80 % of the light (13) from the light source (2), preferably 30 %.

4. Optical glare limiter in accordance with claims 1 to 3, **characterized by the** prism (1') being a longitudinal prism (19) preferably shaped in a sawtooth form and the prisms counter-rotated diffracting the stream of light (13) from the light source (2) into two light streams (20), preferably of equal brightness.

5. Optical glare limiter in accordance with claim 1, **characterized by** the light sensor component (4) being a component whose electrical output can be sufficiently changed depending on the intensity of the light coming from the blinding source (18).

6. Optical glare limiter in accordance with claims 1 to 5, **characterized by** the light sensor component (4) being a photodiode, phototransistor, photoreceptor, light/frequency transducer, light/current transducer, fluorescence collector or solar cell strip.

7. Optical glare limiter in accordance with claim 1, **characterized by** the light source (2) having its spectrum in the visible range and an adjustment of the human eye is accomplished with the radiated light energy with a homogenous illumination of the interior of the vehicle at an average brightness and a typical bulb is a light diode, for instance an aluminum-indium-gallium-phosphate light diode.

8. Optical glare limiter in accordance with claims 1 to 7, **characterized by** being installed in a vehicle in such a manner that it illuminates the field of vision equally and in a broad area, and that it is preferably attached so as to swing or fold out or in the sun visor of the vehicle and is in the optical axis of the driver.

## Revendications

1. Limiteur d'éblouissement optique utilisant une source de courant électrique composée d'un composant récepteur de lumière (4) et d'une source de lumière (2), dont le rayonnement lumineux (13) est susceptible d'être réglé en fonction du rayonnement lumineux d'une source d'éblouissement externe (18), **caractérisé en ce que** la source de lumière (2) est pourvue d'un réflecteur (3) et d'un prisme (1') et est disposée de telle façon que son rayonnement lumineux (13) frappe entièrement une surface réfléchissante, et le rayonnement lumineux réfléchi par cette surface présente dans le champ visuel (12, 14) un éblouissement réduit.

2. Limiteur d'éblouissement optique selon la revendication 1, **caractérisé en ce qu'**un diffuseur (1, 8) est placé devant le prisme (1', 19) et/ou le réflecteur (3) présente une configuration asymétrique.

3. Limiteur d'éblouissement optique selon la revendication 1 ou 2, **caractérisé en ce que** le diffuseur (1, 8) est un disque de verre opalin de nature connue qui adsorbe 20% à 80% du rayonnement lumineux (13) de la source de lumière (2), de préférence 30%.

4. Limiteur d'éblouissement optique selon l'une des revendications 1 à 3, **caractérisé en ce que** le prisme (1') présente une configuration de prisme allongé (19) muni de prismes disposés dans le sens contraire les uns par rapport aux autres, présentant de préférence une forme en dents de scie et diffractant le rayonnement lumineux (13) de la source de lumière (2) en deux flux lumineux (20), de préférence en deux flux lumineux de même luminance.

5. Limiteur d'éblouissement optique selon la revendication 1, **caractérisé en ce que** le composant récepteur de lumière (4) est un composant dont la grandeur de sortie électrique varie, de façon susceptible d'être reproduite assez intensément, en fonction de l'intensité du rayonnement lumineux de la source d'éblouissement externe (18).

6. Limiteur d'éblouissement optique selon l'une des revendications 1 à 5, **caractérisé en ce que** le composant récepteur de lumière (4) est une photodiode, un phototransistor, une photorésistance, un convertisseur lumière/fréquence, un convertisseur lumière/tension, un collecteur de fluorescence ou une barre de cellules solaires.

7. Limiteur d'éblouissement optique selon la revendication 1, **caractérisé en ce que** la source de lumière (2) possède son spectre dans le domaine du visible et, à l'aide de l'énergie lumineuse diffusée, on obtient une adaptation de l'oeil humain à un niveau de luminance moyen dans le cas d'un éclairage homogène de l'habitacle du véhicule, et une lampe à incandescence de nature connue est une diode luminescente, par exemple une diode luminescente d'aluminium-indium-gallium-phosphate.

8. Limiteur d'éblouissement optique selon l'une des revendications 1 à 7, **caractérisé en ce qu'**il est disposé dans un véhicule de telle façon qu'il illumine le champ visuel le plus largement et uniformément possible, et que, à cette fin, il est disposé sur ou dans le pare-soleil du véhicule et dans l'axe optique du conducteur du véhicule de façon susceptible de pivoter ou de s'abaisser.
